# EUROPEAN PATENT SPECIFICATION

(11) **EP 1 322 506 B1**
(45) Date of publication and mention of the grant of the patent: **30.06.2004**
(21) Application number: 01967074.4
(22) Date of filing: 11.09.2001
(51) Int. Cl.: B60R 25/00, B62D 53/08

(54) **LOCKING DEVICE FOR A SEMITRAILER**
VERRIEGELUNGSVORRICHTUNG FÜR EINEN SATTELAUFLIEGER
DISPOSITIF DE VERROUILLAGE POUR SEMI-REMORQUE

(30) Priority: 13.09.2000 DK 200001357
(43) Date of publication of application: 02.07.2003
(73) Proprietor: Rokkedal, Niels Hasager, 8270 Hojbjerg (DK); Soerensen, Peter Hasager, 8464 Galten (DK); Andersen, Kim, 8500 Grena (DK)
(72) Inventor: Rokkedal, Niels Hasager, 8270 Hojbjerg (DK); Soerensen, Peter Hasager, 8464 Galten (DK); Andersen, Kim, 8500 Grena (DK)
(74) Representative: Tellefsen, Jens J.
(86) International application number: PCT/DK2001/000588
(87) International publication number: WO 2002/022408

(56) References cited:
- WO-A1-01/28846
- WO-A1-87/02947
- DE-A1- 19 538 306
- DE-C1- 4 429 125
- GB-A- 2 256 176
- NL-A- 8 801 145
- US-A- 4 614 357

## Description

The present invention concerns a locking device for a semitrailer, comprising a kingpin on the trailer for interaction with an engagement mechanism on the fifth wheel on a trailer truck, the locking device comprising a housing arranged in the bottom of the trailer and comprising a safety pin situated in immediate vicinity of the kingpin and capable of being displaced between a first position above the bottom of the semitrailer and a second position where an end part of the safety pin protrudes under the bottom of the trailer where it may be held by a blocking mechanism.

It is a recognised fact that an increasing number of semitrailers are stolen. Many of the thefts occurs by thieves backing a semitrailer truck under a semitrailer standing unlocked without any supervision on a parking lot. Then coupling is made whereafter the thief drives away with the trailer.

There are a number of locking devices on the market preventing or impeding such coupling. Some of these locks are heavy and difficult to use due to manual handling. Other locks comprise separate parts that may be lost, thus precluding secure locking.

US patent 4 614 357 discloses a semitrailer anti-theft locking system wherein a plunger is provided which, when the pneumatic system is relieved from pressure, is brought to a position where it is not possible to hook up the semitrailer to another truck. The pneumatic system is further provided with an access lock whereby potential thieves cannot supply air and thereby actuate the plunger.

Locking devices arranged in the bottom of the trailer, preferably between the side members of the trailer chassis, have previously been proposed, whereby the locking device is difficult to access for thieves.

From DE 195 38 306 a locking device is known of the kind mentioned in the introduction. This device is a technically and operationally complicated lock. It is particularly disadvantageous since it is self-locking in one or the other position whereby a person may easily ascertain whether the locking device is activated or deactivated, thus increasing the risk of theft in a situation where the trailer is standing with unlocked locking device.

The locking device is thus provided as a self-locking mechanism where a safety pin or wedge may be provided in a blocked first or locking second position. The safety pin is pivotably suspended and may be pivoted by means of a spring cylinder device. The pivotable safety pin is held in its first or second position by using a further mechanism in the form of a bolt which is pivotably suspended by a further bearing. In order to secure the safety pin in the first or second position, there is provided a further blocking element which is pivotably suspended in a third bearing for interacting with the bolt. This further blocking element is actuated by means of a further spring/cylinder device turning the blocking element between two extreme positions.

Thus we are speaking of a technically complicated construction requiring actuation of several actuation devices which are subject to functional failure and erroneous operation. Thus it is necessary that the two operation devices in the shape of the spring cylinder mechanisms are actuated mutually correct in order to achieve correct positioning of the safety pin.

Furthermore, the prior art locking device is disadvantageous in that it is locked in one or the other position. If an authorised user forgets to perform locking, an unauthorised user will easily detect that the locking device is in its unlocked position as the safety pin is then in the retracted first position. Just by looking at the locking device, a thief may thus ascertain whether it is possible to steal the semitrailer.

It is the purpose of the present invention to provide a locking device where these drawbacks are relieved, indicating a mechanically and operationally simple construction and minimising the risk of theft even if the locking device is not activated.

This is achieved with a device which is peculiar in that the safety pin is slidingly disposed in a downwardly open boring and is biased towards the second position by a spring provided at the bottom of the boring, as the pin has a flange interacting with a shoulder in the boring, that the blocking mechanism comprises a locking pin the movement of which being controlled by control means and being displaceable into and out of engagement with a transverse groove formed in the pin, where the groove is aligned with the locking pin in the second position of the pin, and that the pin has a downwardly facing, dome-shaped end part. The boring will have a cross-section substantially corresponding to the cross-section of the pin.

The safety pin is provided as a pin axially sliding in a boring against the action of a spring provided at the bottom of the boring, a very simple construction is provided. By an authorised engagement between the kingpin and the closing mechanism on the fifth wheel in a situation where the locking device is unlocked, the downwardly dome-shaped end part with cause an upwardly directed displacement of the safety pin against the action of the spring. In a locked situation, the dome-shaped end part will protrude outside of a plane supporting surface on the trailer. This plane surface will be able to come into contact with the plane upper side of the fifth wheel, and simultaneously the kingpin will not become engaged as its enlarged head cannot be brought in under the fifth wheel for correct engagement with the groove of the fifth wheel.

A person not authorised to remove the trailer cannot immediately see whether the locking device is in its locked or unlocked position as the safety pin, due to the action of the spring, will always be in the second position where the end part with the dome-shaped end part is protruding under the bottom of the semitrailer. By suitable dimensioning of the spring so that the force cannot be surmounted by manual action, an unauthorised user will be unable to ascertain whether the locking device is unlocked or locked. As only a transverse groove is provided for the locking pin in the advanced position of the pin, it is not possible in an unintended way to place the safety pin in the blocked first position where an unauthorised person may see immediately that it is possible to steal the semitrailer.

As an authorised user by operating the control means may only ensure a position of the locking pin in an engaging position or an unengaged position, a very simple operation without risk of incorrect operation is established. When the authorised user is to couple a trailer truck to a semitrailer, it will thus only be necessary to actuate the blocking mechanism an bring the locking pin out of engagement with the safety pin.

It is preferred that the control boxes are provided with a keyboard, and that activation occurs by means of a PIN-code. The control box is preferably powered via the wiring of the semitrailer. Thus it will only be possible to activate the locking device when the semitrailer is connected with the truck trailer. When this has occurred, the only other power supply necessary, is the force coming from the movement of the truck trailer during the coupling. Thus there will be no need for an actuator built into or associated with the locking device itself, which may cause functional failure and/or incorrect operation.

The blocking device will preferably comprise a double-acting pneumatic cylinder which is switched by means of a valve via an electric signal from the control box, a switching valve for locking or unlocking the locking pin. Such a pneumatic cylinder may preferably be connected with the pneumatic system of the trailer. Alternatively, there may be used a hydraulic cylinder or an electric activation of the locking pin by means of a relay or similar devices.

In a particularly simple embodiment, the safety pin is cylindric and has a rounded, preferably spherical end part. Such a construction is simple to manufacture, and it is preferred that the locking pin of the blocking mechanism is oriented perpendicularly to the axial extension of the cylindric safety pin. Hereby, exertion of force on the safety device in the axial direction will not cause release of the locking pin.

It is preferred that it is only the dome-shaped end part of the safety pin which protrudes under the bottom of the trailer in the second locked position. In this way it will be difficult to sabotage the safety pin.

The safety pin may be located at any position close to the kingpin where it may be brought into contact with the upper side of the fifth wheel on the trailer truck. However, it is preferred that it is placed in front of the kingpin as seen in the normal direction of driving of the semitrailer. Hereby is it impossible to perform coupling between the kingpin and the engagement mechanism of the fifth wheel in an unauthorised way in a position where the safety pin is placed in the inserting groove provided on the fifth wheel for positioning the kingpin in the engagement mechanism.

A locking device according to the invention will thus hinder in its second locked position that the engagement mechanism on the fifth wheel on the trailer truck and the kingpin on the semitrailer may engage each other. Hereby, an unauthorised coupling is rendered impossible. When the semitrailer is abandoned, it is possible to let the lock be locked or unlocked. Thus it is possible to abandon the semitrailer e.g. at ferry harbours or other closed areas where a certain risk of theft exists but where it is suitable that ferry personnel easily and quickly may couple a semitrailer to a truck trailer.

The invention will now be explained in more detail with reference to the accompanying schematic drawing, where:
- Fig. 1: shows schematically a truck trailer with a semitrailer coupled on,
- Fig. 2: shows an enlarged partial view of the fifth wheel of the trailer truck and a semitrailer with a locking device according to the invention, and
- Fig. 3: shows a view of a detail of the locking device according to the invention.

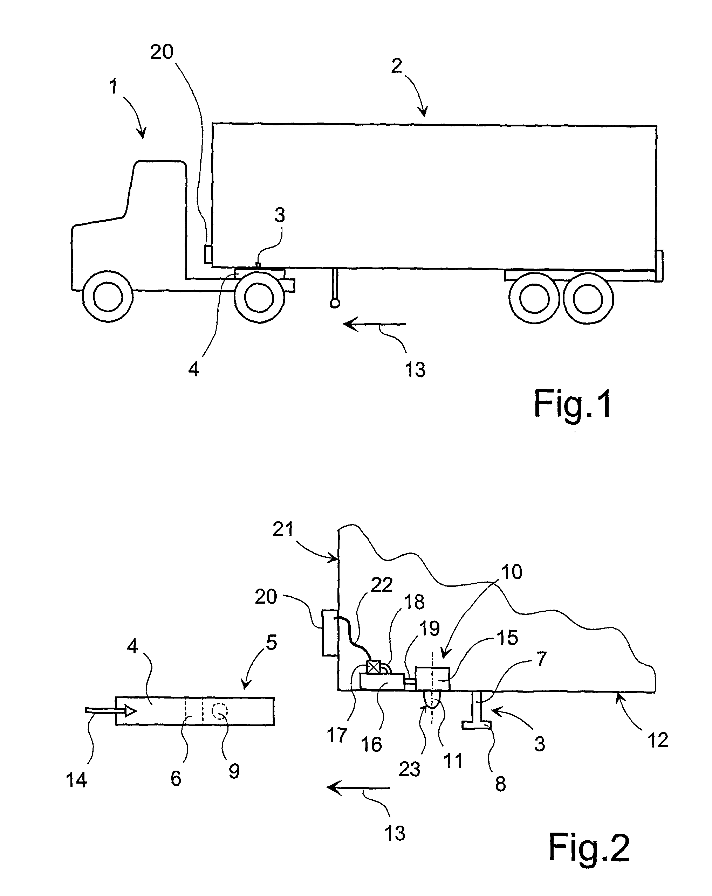

In Figure 1 is illustrated a trailer truck 1 coupled together with a semitrailer 2. The coupling takes place via a kingpin 3 (see Figure 2) engaging the fifth wheel 4 on the trailer truck 1.

In Figure 2 is illustrated how the fifth wheel 4 comprises an engagement mechanism in the shape of an open groove 5 ending in a groove 6 for receiving the stem 7 of the kingpin 3 while the head 8 is situated at the underside of the fifth wheel. When the kingpin 3 is placed in the groove 6, it is secured therein by means of a transverse rod 9.

Figure 2 furthermore illustrates a locking device 10 according to the present invention which is arranged for preventing coupling between the fifth wheel 4 and the kingpin 3 when the safety pin 11 is in the advanced or protruding position under the bottom 12 of the semitrailer as illustrated in Figure 2. The locking device 10 is placed in immediate vicinity of the kingpin 3 at a position in front of this as seen in normal driving direction 13 of the semitrailer. The locking pin 11 will hereby, in an advanced position, hinder the sliding of the fifth wheel over the kingpin 3 when the trailer truck is displaced by backing in direction 14 for bringing the kingpin 3 into the groove 6.

Figure 2 shows that the locking device 10 comprises a housing 15 for accommodating the safety pin 11, a cylinder 16 controlled by a valve 17, which via pneumatic hoses 18 connected with the pneumatic system (not shown) of the semitrailer may displace the piston 19 of the cylinder between two extreme positions as a result of a control signal from an electric control box 20 which is placed at a comfortable position at the front side of the semitrailer 2 for easy operation. The control box will preferably have a numeric keyboard by which a numeric code is keyed for operating (PIN-code). The signal is transferred to the valve 17 via a wire connection 22. Alternatively, a remote control device is used where a control box is in wireless connection with a receiver box associated with the valve 17.

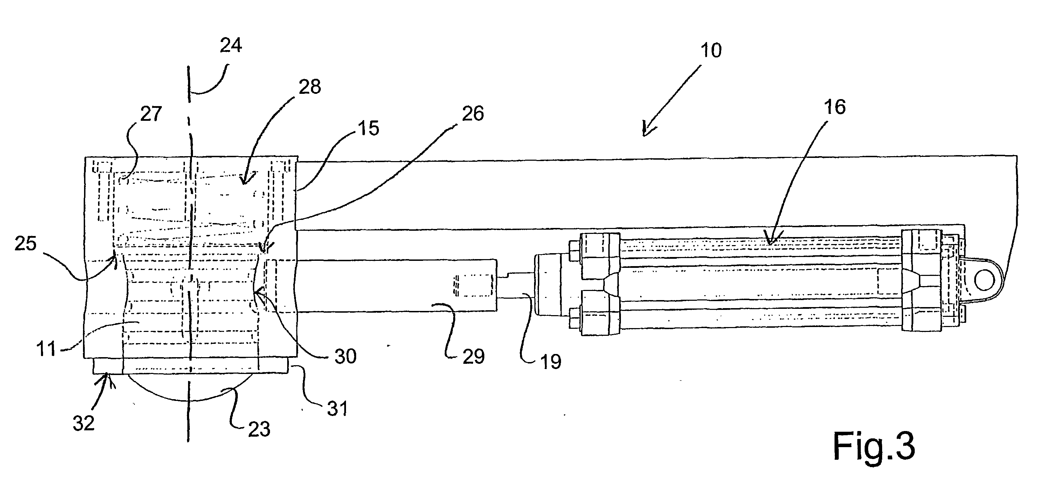

Figure 3 illustrates in greater detail the mechanical parts of the locking device 10. The shown device is based on being arranged at the bottom of the trailer at a position between the supporting side members so that it is protected against unwanted manipulation. The shown device will be placed so that a lower reduced edge area 31 on the housing 15 is placed at the bottom of the semitrailer and so that the downwardly facing surface 32 of the housing 15 is flush with the underside of the semitrailer bottom 12. Hereby only a dome-shaped end part 23 of the safety pin 11 will protrude under the bottom of the semitrailer. This makes it difficult, if not impossible, to sabotage the safety pin when this is in the shown position with the end part 12 protruding under the bottom 12 of the semitrailer.

The safety pin 11 is cylindric about an axis 24 and has an annular collar 25 at its rear end that may be brought into contact with a collar 26 in the housing 15 as the safety pin 11 is displaced downward against the action of a spring 27 placed at the bottom of a cylindric boring 28, where the safety pin 11 is situated for being displaced along the axis 24 between the shown second advanced position and a (not shown) retracted first position, where the safety pin is located entirely inside the housing, in that it is moved upwards due to the force from the trailer truck during coupling whereby the force in the spring 27 is overcome.

In the shown position, the safety pin can be secured by means of a locking pin 29 which is mounted on the piston 19 and is aligned with a boring 30 oriented perpendicularly to the axis 24. The locking pin 29 is shown in its free, released position and may be displaced forward from this into the boring 30 for securing the safety pin 11 in the shown advanced position. Hereby it is not possible to couple the semitrailer with the fifth wheel as the projecting end part 23 will lift the semitrailer up over the fifth wheel 3 so that the kingpin 3 is not engaged. The cylinder 16 is preferably a double-acting cylinder. It is, however, possible to use a cylinder which is only activated in one direction by means of the pneumatic system of the semitrailer and which is brought to its opposite position due to the action from a spring when the pressure is removed. In such a situation, engagement between the locking pin 29 and the groove 30 is always ensured irrespectively of the pressure in the pneumatic system of the semitrailer.

## Claims

1. A locking device (10) for a semitrailer (2), comprising a kingpin (3) on the trailer for interaction with an engagement mechanism on the fifth wheel (4) on a trailer truck (1), the locking device (10) comprising a housing (15) arranged in the bottom (12) of the trailer (2) and comprising a safety pin (11) situated in immediate vicinity of the kingpin (3) and capable of being displaced between a first position above the bottom (12) of the semitrailer and a second position where an end part of the safety pin (11) protrudes under the bottom (12) of the trailer where it may be held by a blocking mechanism, **characterised in that** the safety pin (11) is slidingly disposed in a downwardly open boring (28) and is biased towards the second position by a spring (27) provided at the bottom of the boring (28), as the pin (11) has a flange interacting with a shoulder in the boring (28), that the blocking mechanism comprises a locking pin (29) the movement of which being controlled by control means and being displaceable into and out of engagement with a transverse groove (30) formed in the pin (11), where the groove (30) is aligned with the locking pin (29) in the second position of the pin (11), and that the pin (11) has a downwardly facing, dome-shaped end part (23).

2. A locking device (10) according to claim 1, **characterised in that** the safety pin (11) is cylindric and has a rounded end part (23).

3. A locking device (10) according to claim 1 or 2, **characterised in that** the locking pin (29) of the blocking mechanism is oriented substantially perpendicularly to the pin (11).

4. A locking device (10) according to any preceding claim, **characterised in that** control means (20) of the blocking mechanism comprises a double-acting cylinder (16) which can be switched by means of a valve (17) connected with an electric control box (20) that can transmit a signal for activating the valve (17).

5. A locking device (10) according to claim 4, **characterised in that** the control box (20) is provided with a keyboard, and that activation may occur by typing in a PIN-code.

6. A locking device (10) according to claim 4, **characterised in that** control box (20) is powered via the wiring of the semitrailer (2).

7. A locking device (10) according to any preceding claim, **characterised in that** the control means (20) of the blocking mechanism comprises a pneumatic cylinder connected with the pneumatic system of the semitrailer (2).

8. A locking device (10) according to any preceding claim, **characterised in that** only the rounded end part of the safety pin (11) is protruding under the bottom (12) of the semi-trailer (2) in the locked second position.

9. A locking device (10), according to any preceding claim, **characterised in that** the safety pin (11) is situated in front of the kingpin (3) as seen in the normal direction of driving (13) of the semitrailer (2).

10. A locking device (10) according to any preceding claim, **characterised in that** the force in the spring (27) urging the safety pin (8) towards its second position is dimensioned so that it cannot be overcome by action of manual force.

## Patentansprüche

1. Verriegelungsvorrichtung (10) für einen Sattelauflieger (2) mit einem Sattelzapfen (3) an dem Auflieger zur Wechselwirkung mit einer Eingriffseinrichtung auf der Aufsattelvorrichtung (4) auf einer Zugmaschine (1), wobei die Verriegelungsvoirichtung (10) ein Gehäuse (15) aufweist, welches in dem Boden (12) des Aufliegers (2) angeordnet ist, und einen Sicherheitsbolzen (11) aufweist, welcher sich in unmittelbarer Nähe des Sattelzapfens (3) befindet und für eine Verstellung zwischen einer ersten Position über dem Boden (12) des Aufliegers und einer zweiten Position geeignet ist, in welcher ein Endteil des Sicherheitsbolzens (11) unter dem Boden (12) des Aufliegers hervorsteht, wo es durch eine Blockiereinrichtung gehalten werden kann, **dadurch gekennzeichnet, dass** der Sicherheitsbolzen (11) in einer nach unten gerichteten offenen Bohrung (28) verschiebbar angeordnet ist und auf die zweite Position zu durch eine Feder (27) vorgespannt ist, welche am Boden der Bohrung (28) vorgesehen ist, wobei der Bolzen (11) einen Flansch aufweist, welcher mit einer Schulter in der Bohrung (28) zusammenwirkt, und dass die Blockiereinrichtung einen Verriegelungsbolzen (29) aufweist, wobei dessen Bewegung durch Steuereinrichtungen gesteuert ausgebildet ist, und wobei dieser in und außer Eingriff mit einer in den Bolzen (11) eingebrachten Quernut (30) bringbar ausgebildet ist, wobei die Nut (30) mit dem Verriegelungsbolzen (29) in der zweiten Position des Bolzens (11) fluchtet, und dass der Bolzen (11) ein nach unten weisendes kuppelförmiges Endteil (23) aufweist.

2. Verriegelungsvorrichtung (10) nach Anspruch 1, **dadurch gekennzeichnet, dass** der Sicherheitsbolzen (11) zylindrisch ausgebildet ist und ein abgerundetes Endteil (23) aufweist.

3. Verriegelungsvorrichtung (10) nach Anspruch 1 oder 2, **dadurch gekennzeichnet, dass** der Verriegelungsbolzen (29) der Blockiereinrichtung im Wesentlichen senkrecht zu dem Bolzen (11) ausgerichtet ist.

4. Verriegelungsvorrichtung (10) nach einem der vorhergehenden Ansprüche, **dadurch gekennzeichnet, dass** Steuereinrichtungen (20) der Blockiereinrichtung einen doppeltwirkenden Zylinder (16) aufweisen, welcher mittels eines Ventils (17) angesteuert werden kann, das mit einem elektrischen Schaltkasten (20) verbunden ist, welcher ein elektrisches Signal zur Aktivierung des Ventils (17) übertragen kann.

5. Verriegelungsvorrichtung (10) nach Anspruch 4, **dadurch gekennzeichnet, dass** der Schaltkasten (20) mit einer Tastatur ausgerüstet ist, und dass Aktivierung durch Eingabe eines PIN-Codes erfolgt.

6. Verriegelungsvorrichtung (10) nach Anspruch 4, **dadurch gekennzeichnet, dass** der Schaltkasten (20) über die Verkabelung des Sattelaufliegers (2) mit Energie versorgt ist.

7. Verriegelungsvorrichtung (10) nach einem der vorhergehenden Ansprüche, **dadurch gekennzeichnet, dass** die Steuereinrichtung (20) der Blockiereinrichtung einen pneumatischen Zylinder aufweist, welcher mit dem pneumatischen System des Sattelaufliegers (2) verbunden ist.

8. Verriegelungsvorrichtung (10) nach einem der vorhergehenden Ansprüche, **dadurch gekennzeichnet, dass** nur das abgerundete Endteil des Sicherheitsbolzens (11) unter dem Boden (12) des Sattelaufliegers (2) in der verriegelten zweiten Position hervorsteht.

9. Verriegelungsvorrichtung (10) nach einem der vorhergehenden Ansprüche, **dadurch gekennzeichnet, dass** der Sicherheitsbolzen (11) gesehen in der normalen Fahrtrichtung (13) des Sattelaufliegers (2) vor dem Sattelzapfen (3) angeordnet ist.

10. Verriegelungsvorrichtung (10) nach einem der vorhergehenden Ansprüche, **dadurch gekennzeichnet, dass** die Kraft in der Feder (27), welche den Sicherheitsbolzen (11) in seine zweite Position zwingt, so dimensioniert ist, dass sie nicht durch manuelle Kraft überwunden werden kann.

## Revendications

1. Dispositif de verrouillage (10) pour une semi-remorque (2), comprenant un pivot d'attelage (3) sur la remorque pour l'interaction avec un mécanisme d'engagement sur la sellette d'attelage (4) sur un tracteur (1) de semi-remorque, le dispositif de verrouillage (10) comprenant un logement (15) agencé dans le fond (12) de la semi-remorque (2) et comprenant une broche de sûreté (11) située au voisinage immédiat du pivot d'attelage (3) et capable d'être déplacée entre une première position au-dessus du fond (12) de la semi-remorque et une seconde position où une partie d'extrémité de la broche de sûreté (11) fait saillie sous le fond (12) de la semi-remorque où elle peut être maintenue par un mécanisme de blocage,
**caractérisé en ce que** la broche de sûreté (11) est disposée de façon coulissante dans un alésage ouvert vers le bas (28) et est sollicitée vers la seconde position par un ressort (27) prévu au niveau du fond de l'alésage (28), alors que la broche (11) a un rebord interagissant avec un épaulement dans l'alésage (28), **en ce que** le mécanisme de blocage comprend une broche de verrouillage (29) dont le mouvement est commandé par des moyens de commande et est déplaçable en et hors d'engagement avec une gorge transversale (30) réalisée dans la broche (11), où la gorge (30) est alignée avec la broche de verrouillage (29) dans la seconde position de la broche (11), et **en ce que** la broche (11) présente une partie d'extrémité (23) en forme de dôme, faisant face vers le bas.

2. Dispositif de verrouillage (10) selon la revendication 1,
**caractérisé en ce que** la broche de sûreté (11) est cylindrique et présente une partie d'extrémité arrondie (23).

3. Dispositif de verrouillage (10) selon la revendication 1 ou 2,
**caractérisé en ce que** la broche de verrouillage (29) du mécanisme de blocage est orientée sensiblement perpendiculairement à la broche (11).

4. Dispositif de verrouillage (10) selon une quelconque revendication précédente,
**caractérisé en ce que** les moyens de commande (20) du mécanisme de blocage comprennent un vérin à double effet (16) qui peut être commuté par l'intermédiaire d'une valve (17) reliée à un boîtier de commande électrique (20) qui peut transmettre un signal pour actionner la valve (17).

5. Dispositif de verrouillage (10) selon la revendication 4,
**caractérisé en ce que** le boîtier de commande (20) est muni d'un clavier, et **en ce que** l'actionnement peut se produire en tapant un code PIN.

6. Dispositif de verrouillage (10) selon la revendication 4,
**caractérisé en ce que** le boîtier de commande (20) est alimenté via le câblage de la semi-remorque (2).

7. Dispositif de verrouillage (10) selon une quelconque revendication précédente,
**caractérisé en ce que** les moyens de commande (20) du mécanisme de blocage comprennent un vérin pneumatique connecté au système pneumatique de la semi-remorque (2).

8. Dispositif de verrouillage (10) selon une quelconque revendication précédente,
**caractérisé en ce que** seule la partie d'extrémité arrondie de la broche de sûreté (11) fait saillie sous le fond (12) de la semi-remorque (2) dans la seconde position verrouillée.

9. Dispositif de verrouillage (10) selon une quelconque revendication précédente,
**caractérisé en ce que** la broche de sûreté (11) est située devant le pivot d'attelage (3) de la façon vue dans la direction normale d'entraînement (13) de la semi-remorque (2).

10. Dispositif de verrouillage (10) selon une quelconque revendication précédente,
**caractérisé en ce que** la force dans le ressort (27) sollicitant la broche de sûreté (11) vers sa seconde position est dimensionnée de sorte qu'elle ne peut pas être surmontée par l'action d'une force manuelle.
